**Europäisches Patentamt**

(19) **European Patent Office**

**Office européen des brevets**

(11) Veröffentlichungsnummer: **0 283 537**
**B1**

(12) **EUROPÄISCHE PATENTSCHRIFT**

(45) Veröffentlichungstag der Patentschrift:
**19.12.90**

(51) Int. Cl.⁵: **F16K 5/06**, F16K 41/04

(21) Anmeldenummer: **87104388.1**

(22) Anmeldetag: **25.03.87**

(54) **Absperrhahn.**

(43) Veröffentlichungstag der Anmeldung:
**28.09.88 Patentblatt 88/39**

(45) Bekanntmachung des Hinweises auf die Patenterteilung:
**19.12.90 Patentblatt 90/51**

(84) Benannte Vertragsstaaten:
**AT BE CH DE ES FR GB IT LI LU NL SE**

(56) Entgegenhaltungen:
**EP-A- 0 050 517**
**EP-A- 0 209 647**
**WO-A-83/01099**
**FR-A- 2 501 278**
**US-A- 4 006 881**
**US-A- 4 273 148**

(73) Patentinhaber: **MANIBS Spezialarmaturen GmbH & Co.
KG, Lempstrasse 24,
D-5630 Remscheid 16 (Blledinghausen)(DE)**

(72) Erfinder: **Schafstein, Jürgen, Baisieper Strasse 94,
D-5630 Remscheid 1(DE)**

(74) Vertreter: **Mentzel, Norbert, Dipl.-Phys. et al,
Patentanwälte Dipl.-Phys. Buse Dipl.-Phys. Mentzel
Dipl.-Ing. Ludewig Unterdörnen 114,
D-5600 Wuppertal 2(DE)**

## Patentansprüche

Die Erfindung betrifft einen Absperrhahn für eine als Hausanschluß dienende Druckrohrleitung, bestehend aus einem metallischen, rohrförmigen Gehäuse, welches beidendig metallische Rohrstutzen für den Anschluß der Zuleitung und der Ableitung aufweist und ein mit einer außerhalb des Gehäuses angeordneten Handhabe betätigbares Absperrorgan aufnimmt, dessen die Verbindung zur Handhabe herstellende Drehachse in einer Lagerbohrung des Gehäuses drehbar gelagert und der Ringspalt zwischen der Drehachse und der Lagerbohrung mit mindestens einem in einer umlaufenden Ringnut eingesetzten O-Ring abgedichtet ist.

Bei diesem aus der EP-A 209 647 bekannten Absperrhahn für eine als Hausanschluß dienende Druckrohrleitung wird der Ringspalt zwischen der Drehachse und der Lagerbohrung mit mindestens einem O-Ring zuverlässig abgedichtet, der in einer umlaufenden Ringnut eingesetzt ist. Bei einem Brandfall kann es jedoch vorkommen, daß die Druckrohrleitung und damit der Absperrhahn erhitzt wird, wodurch der aus einem weichelastischen Material, wie Gummi, Kunststoff od.dgl., bestehende O-Ring mindestens teilweise zerstört wird. Dadurch kann das durch die Druckrohrleitung strömende Haushaltsgas durch den Ringspalt zwischen der Drehachse und der Lagerbohrung ausströmen.

Der Erfindung liegt die Aufgabe zugrunde, einen Absperrhahn für eine als Hausanschluß dienende Druckrohrleitung der eingangs erläuterten Art zu schaffen, bei der auch in Brandfällen eine einwandfreie Dichtheit gewährleistet ist.

Diese Aufgabe ist erfindungsgemäß dadurch gelöst, daß dem Ringspalt zusätzlich zu dem O-Ring in einer weiteren in der Mantelfläche der Lagerbohrung des Gehäuses vorgesehenen, umlaufenden Ringnut ein Ring aus einem an sich bekannten Brandschutzmaterial, bestehend aus einem bei einer Erwärmung auf über 120°C sich aufschäumend ausdehnenden und Wasserdampf ausscheidenden und bei ca. 180°C etwa das 5- bis 11-fache Volumen aufweisenden, eingebettete Silikate aufweisenden synthetischen Elastomer, derart zugeordnet ist, daß bei einer durch einen Brand od.dgl. bewirkten Erwärmung des Absperrhahns die Aufschäumung den Ringspalt umlaufend ausfüllt und anstelle des durch die Erwärmung ggf. zerstörten O-Ringes abdichtet. Dadurch wird in einfacher Weise beim bestimmungsgemäßen Gebrauch des Absperrhahns der umlaufende Ringspalt zwischen der Drehachse und der Lagerbohrung mit mindestens einem in einer umlaufenden Ringnut eingesetzten O-Ring abgedichtet. Bei einer Erwärmung des Absperrhahns auf über 120°C durch einen Brand od.dgl. beginnt der zusätzliche Ring aus dem Brandschutzmaterial sich aufschäumend auszudehnen unter Ausscheidung von Wasserdampf und füllt den Ringspalt zumindest auf einem Teil seiner axialen Länge aus und bildet somit eine Abdichtung, die selbst bei einer vollständigen Zerstörung des O-Ringes aus weichelastischem Material durch die Erhitzung ein Ausströmen des in der Druckrohrleitung unter Druck stehenden Gases verhindert. Die neueren Bestimmungen, wonach solche Absperrhähne für Druckrohrleitungen eine Erwärmung auf 650°C eine halbe Stunde aushalten müssen, wird somit genüge getan.

Aus der US-A 4 273 148 ist bereits ein Absperrhahn bekannt, bei dem jedoch die Drehachse nicht in einer Lagerbohrung des Gehäuses drehbar gelagert ist, sondern in aus Teflon bestehenden Dichtungsringen. Dabei ist zwischen der Drehachse und dem Gehäusedurchbruch ein verhältnismäßig breiter Ringraum angeordnet. Dieser verhältnismäßig große Freiraum zwischen dem Gehäusedurchbruch und der Drehachse ist mit Brandschutzmaterial ausgefüllt, der bereits bei der Montage des Absperrhahnes in den Freiraum zwischen der Drehachse und dem Gehäusedurchbruch eingepreßt wird. Der Ringraum ist somit bereits beim bestimmungsgemäßen Gebrauch des Absperrhahns mit dem Brandschutzmaterial ausgefüllt. Beim bestimmungsgemäßen Gebrauch ist die Drehachse innerhalb der Ausfüllung mit dem Brandschutzmaterial zu drehen. Nach einem mehrmaligen Drehen der Drehachse innerhalb der Ausfüllung dürfte somit eine absolute Abdichtung des Ringraumes nicht mehr gewährleistet sein, zumal das Brandschutzmaterial auch nicht bei Erwärmung aufschäumt.

Aus der EP-A 50 517 ist eine Dichtungsanordnung zwischen zwei relativ zueinander drehbaren Elementen bekannt, wobei das eine Element als Schließelement anzusehen ist. Die Dichtungsanordnung soll dabei gegen Zug, Rauch und Feuer wirken. Die Dichtungsanordnung besteht dabei aus einer in einem Kanal angeordneten Dichtungslippe, die gegen Zug und Rauch wirken soll. In einem zweiten Kanal der Dichtungsanordnung ist ein Brandschutzmaterial angeordnet, welches bei einem Brand durch die Erwärmung aufschäumt und eine Dichtung gegen das Feuer bildet.

Der aus Brandschutzmaterial bestehende Ring kann mit seiner inneren Mantelfläche mit einem radialen Abstand zur äußeren Mantelfläche der Drehachse angeordnet sein. Dadurch wird das Einschieben der Drehachse in die Lagerbohrung durch den aus Brandschutzmaterial bestehenden Ring nicht beeinträchtigt. Durch das Aufschäumen im Brandfalle wird dieser Abstand ebenfalls in einfacher Weise ausgefüllt.

Auf der Zeichnung ist die Erfindung in einem Ausführungsbeispiel dargestellt, und zwar zeigen:

Fig. I einen erfindungsgemäßen Absperrhahn mit Anschlußrohrstutzen, die zum Anschweißen der Zuleitung und der Ableitung dienen, im Längsschnitt und

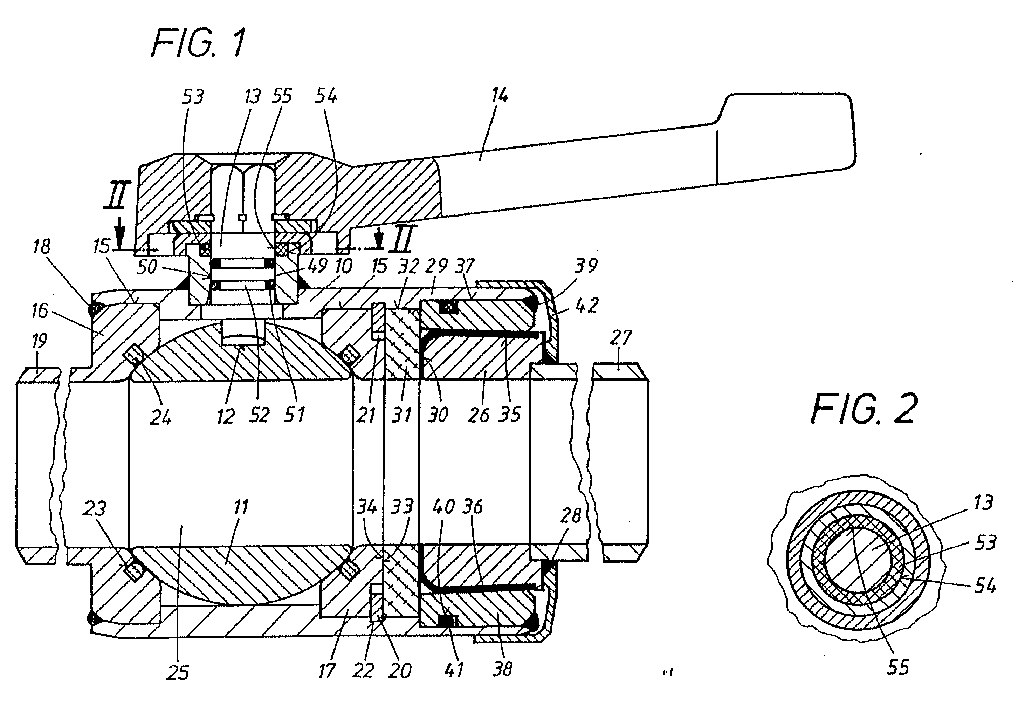

Fig. 2 einen Schnitt nach der Linie II-II der Fig. I.

Der auf der Zeichnung dargestellte Absperrhahn für eine als Hausanschluß dienende Druckrohrleitung besteht aus einem metallischen, rohrförmigen Gehäuse I0, welches ein kugelförmiges Absperrorgan II aufnimmt. Das kugelförmige Absperrorgan II ist drehbar in dem rohrförmigen Gehäuse I0 gelagert und weist eine Ausnehmung I2 auf, in die eine Drehachse I3 formschlüssig eingreift. Die Drehachse I3 durchgreift eine Lagerbohrung 50 des metallischen Gehäuses I0 und weist an ihrem freien Ende

eine Betätigungshandhabe I4 auf. Mit der Betätigungshandhabe I4 kann somit das kugelförmige Absperrorgan II aus der in der Fig.I dargestellten Offenstellung um 90° gedreht und somit in die Sperrstellung überführt werden.

Das rohrförmige Gehäuse I0 weist an seinen beiden Enden durchmesservergrößerte Ausnehmungen I5 auf, in denen Ringscheiben I6, I7 eingesetzt sind. Die Ringscheibe I6 ist dabei mit einer Schweißnaht I8 in der Ausnehmung I5 des rohrförmigen Gehäuses I0 gehaltert und weist einen angeformten Rohrstutzen I9 auf, der zum Anschweißen an die nicht näher dargestellte Zuleitung dient.

Die zweite Ringscheibe I7 ist mit einem Sprengring 20 in der Ausnehmung I5 des rohrförmigen Gehäuses I0 gehaltert, wobei der Sprengring in einer Ausnehmung 2I der Ringscheibe I7 angeordnet ist und in eine umlaufende Nut 22 des rohrförmigen Gehäuses I0 eingreift.

Die beiden Ringscheiben I6 und I7 sind an den Stirnflächen, die dem kugelförmigen Absperrorgan II zugekehrt sind, kalottenförmig ausgebildet und liegen so dem kugelförmigen Absperrorgan II dicht an. In den Anlageflächen der Ringscheiben I6, I7 sind dabei umlaufende Nuten 23 für die Aufnahme von Dichtungsringen 24 vorgesehen. Die beiden Ringscheiben I6, I7 liegen somit abgedichtet an dem kugelförmigen Absperrorgan II an. Das kugelförmige Absperrorgan II ist mit einem Durchbruch 25 versehen, der in der Offenstellung des kugelförmigen Absperrorgans II, die in der Fig. I dargestellt ist, gleichachsig zum Rohrstutzen I9 verläuft. Zum Absperren wird das kugelförmige Absperrorgan II um 90° um die Drehachse I3 gedreht, so daß der Durchbruch 25 rechtwinklig zum Rohrstutzen I9 angeordnet ist.

Für den Anschluß der Ableitung ist ein Anschlußrohrstutzen 26 vorgesehen. An dem Anschlußrohrstutzen 26 ist eine Ableitungsrohrleitung 27 mit der Schweißnaht 28 befestigt.

Der Rohrstutzen 26 ist in einer Verlängerung 29 des rohrförmigen Gehäuses I0 befestigt, wobei der Rohrstutzen 26 gleichachsig zum Rohrstutzen I9 verläuft. Der isoliert gehalterte Anschlußrohrstutzen liegt mit seiner dem anderen Rohrstutzen I9 zugekehrten freien Stirnfläche 30 gegen einen Dichtungsring 3I aus weichelastischem Material, wie Gummi, Kunststoff od.dgl., an. Der Dichtungsring 3I stützt sich dabei mit seiner äußeren Mantelfläche gegen die innere Mantelfläche 32 der in der Gehäuseverlängerung 29 vorgesehenen Aufnahme I5 und mit der dem isoliert gehalterten Anschlußrohrstutzen 26 abgekehrten Stirnfläche 33 gegen die von der Ringscheibe I7 gebildeten Ringschulter 34 ab.

Der Anschlußrohrstutzen 26 ist an seiner dem anderen Rohrstutzen I9 zugekehrten freien Stirnfläche 30 und auf dem größeren Teil seiner äußeren Mantelfläche 35 mit einer Isolierschicht 36 versehen. Diese Isolierschicht aus elektrisch isolierendem Material besteht aus einer aufgesprühten Schicht aus Aluminiumoxid, die mit Epoxydharz vakuumimprägniert ist. Diese Isolierschicht kann dabei eine Dicke von bis zu 2 mm aufweisen. Bei der Montage des Absperrhahns wird der Anschlußrohrstutzen 26 in die Gehäuseverlägerung 29 eingeschrumpft. Hierzu ist in einer erweiterten Ausnehmung 37 der Gehäuseverlängerung 29 noch eine metallische Hülse 38 eingesetzt und mit einer Schweißnaht 39 befestigt. In der äußeren Mantelfläche der metallischen Hülse 38 ist eine umlaufende Nut 40 vorgesehen, in der ein Dichtungsring 4I eingesetzt ist.

Die innere Mantelfläche der in der Gehäuseverlängerung 29 eingesetzten Hülse 38, die mit Preßsitz auf der äußeren Mantelfläche der Isolierschicht 36 aufsitzt, und die die Isolierschicht 36 aufweisende äußere Mantelfläche 35 des Anschlußrohrstutzens 26 verlaufen schwach konisch und nehmen zum Einsteckende des Anschlußrohrstutzens 26 zu. Bei der Montage wird der Anschlußrohrstutzen 26 mit der aufsitzenden Isolierschicht 36 auf etwa -50 °C abgekühlt, während die metallische Hülse 38 auf etwa 250 °C erhitzt wird. Danach wird die Hülse 38 auf den Anschlußrohrstutzen 26 in Richtung der Konizität aufgepreßt. Durch das Abkühlen der metallischen Hülse und dem Erwärmen des Anschlußrohrstutzens wird die metallische Hülse 38 mit Preßsitz auf den Anschlußrohrstutzen 26 aufgeschrumpft. Danach wird die metallische Hülse 38 mit dem einsitzenden Anschlußrohrstutzen in die erweiterte Ausnehmung 37 der Gehäuseverlängerung 29 eingeschoben und mit der Schweißnaht 39 befestigt.

Da der Anschlußrohrstutzen 26 in die metallische Hülse 38 eingeschrumpft ist und wegen der konischen Anlageflächen, ist ein Herausziehen des Anschlußrohrstutzens 26 aus der metallischen Hülse 38 wegen des Formschlusses nicht zu befürchten, selbst wenn große Kräfte auf den Anschlußrohrstutzen 26 einwirken.

Die auf dem eingeschobenen Anschlußrohrstutzen aufgesprühte und mit Epoxydharz vakuumimprägnierte Schicht aus Aluminiumoxid ist ein gutes Dielektrikum, so daß selbst eine Spannung von etwa 4000 V nicht durchkommt. Weiter ist diese Isolierschicht wärmebeständig, so daß die Isolierschicht 36 eine Erwärmung auf 650 °C über eine halbe Stunde aushält. Die Dichtheit des Absperrhahnes ist somit zuverlässig gewährleistet, selbst wenn bei einer Erwärmung des Absperrhahnes der Dichtungsring 3I zerstört werden sollte.

Auf dem freien Ende der Gehäuseverlängerung 29 ist eine aus Kunststoff bestehende, ringförmige Abdeckkappe 42 aufgesetzt, die eine elektrisch leitende Verbindung durch nasse Erde od.dgl. zwischen dem Anschlußrohrstutzen 26 und dem rohrförmigen Gehäuse I0 verhindert.

Der Ringspalt 49 zwischen der Lagerbohrung 50 und der Drehachse I3 ist beim dargestellten Ausführungsbeispiel mit zwei O-Ringen 5I abgedichtet. Die O-Ringe 5I sind dabei in umlaufende Ringnuten 52 der Drehachse I3 eingesetzt. Bei einem Brand od.dgl. kann durch Erhitzung des Absperrhahns eine Zerstörung der O-Ringe 5I eintreten.

Der Ringspalt 49 weist zusätzlich zu den O-Ringen 5I einen Ring 53 aus einem an sich bekannten Brandschutzmaterial, bestehend aus einem bei einer Erwärmung auf über I20 °C sich aufschäumend ausdehnenden und Wasserdampf ausscheidenden und bei ca. I80 °C etwa das 5- bis IIfache

Volumen aufweisenden, eingebettete Silikate aufweisenden synthetischen Elastomer, auf. Der Ring 53 aus dem Brandschutzmaterial ist dabei dem Ringspalt 49 derart zugeordnet, daß bei einer durch einen Brand od. dgl. bewirkten Erwärmung des Absperrhahns die Aufschäumung den Ringspalt 49 umlaufend ausfüllt und anstelle des durch die Erwärmung gegebenenfalls zerstörten O-Ringes 51 abdichtet.

Der aus Brandschutzmaterial bestehende Ring 53 ist mit einem axialen Abstand zum O-Ring 51 in einer in der Mantelfläche der Lagerbohrung 50 des Gehäuses 10 vorgesehenen, umlaufenden Ringnut 54 eingesetzt. Dadurch wird in einfacher Weise bei einem Brand od.dgl. der Ringspalt 49 mit der Aufschäumung ausgefüllt und abgedichtet.

Der aus Brandschutzmaterial bestehende Ring 53 ist mit seiner inneren Mantelfläche 55 mit einem radialen Abstand zur äußeren Mantelfläche der Drehachse 13 angeordnet. Dadurch wird das Einschieben der Drehachse 13 in die Lagerbohrung 49 durch den aus Brandschutzmaterial bestehenden Ring 53 nicht beeinträchtigt. Durch das Aufschäumen im Brandfalle wird dieser Abstand ebenfalls in einfacher Weise ausgefüllt. Durch das Ausschäumen ist der Ringspalt 49 zwischen der Lagerbohrung 50 und der Drehachse 13 zuverlässig ausgefüllt und abgedichtet. Nach jedem Brandfall ist dann der Absperrhahn auszuwechseln.

Wie bereits erwähnt, ist die dargestellte Ausführung lediglich eine beispielsweise Verwirklichung der Erfindung und diese nicht darauf beschränkt. Vielmehr sind noch mancherlei andere Ausführungen und Abänderungen möglich. So könnte die Zuleitung auch an dem Anschlußrohrstutzen und die Ableitung an dem Anschlußrohrstutzen 19 angebracht werden. Weiterhin können die als Schweißstutzen ausgebildeten Anschlußrohrstutzen 19, 26 auch als Schraubstutzen ausgebildet werden. Ferner könnte der aus Brandschutzmaterial bestehende Ring 53 auch in einer Ringnut 54 vorgesehen sein, die in der äußeren Mantelfläche der Drehachse 13 angeordnet ist.

<u>Bezugszeichenliste:</u>

10 rohrförmiges Gehäuse
11 Absperrorgan
12 Ausnehmung in 11
13 Drehachse
14 Betätigungshandhabe
15 Ausnehmungen in 10
16 Ringscheibe
17 Ringscheibe
18 Schweißnaht
19 Rohrstutzen an 16
20 Sprengring
21 Ausnehmung in 17
22 umlaufende Nut in 10
23 Nuten in 16, 17
24 Dichtungsring
25 Durchbruch
26 Anschlußrohrstutzen
27 Ableitungsrohrteil
28 Schweißnaht

29 Verlängerung
30 Stirnfläche
31 Dichtungsring
32 innere Mantelfläche
33 Stirnfläche von 31
34 Ringschulter von 17
35 äußere Mantelfläche von 26
36 Isolierschicht
37 erweiterte Ausnehmung von 29
38 metallische Hülse
39 Schweißnaht
40 umlaufende Nut
41 Dichtungsring
42 Abdeckkappe
49 Ringspalt
50 Lagerbohrung
51 O-Ring
52 Ringnut
53 Brandschutz-Ring
54 Ringnut in 50
55 innere Mantelfläche von 53

**Patentansprüche**

Absperrhahn für eine als Hausanschluß dienende Druckrohrleitung, bestehend aus einem metallischen, rohrförmigen Gehäuse (10), welches beidendig metallische Rohrstutzen (19, 26) für den Anschluß der Zuleitung und der Ableitung aufweist und ein mit einer außerhalb des Gehäuses (10) angeordneten Handhabe (14) betätigbares Absperrorgan (11) aufnimmt, dessen die Verbindung zur Handhabe (14) herstellende Drehachse (13) in einer Lagerbohrung (50) des Gehäuses (10) drehbar gelagert und der Ringspalt (49) zwischen der Drehachse (13) und der Lagerbohrung (50) mit mindestens einem in einer umlaufenden Ringnut (52) eingesetzten O-Ring (51) abgedichtet ist, dadurch gekennzeichnet, daß dem Ringspalt (49) zusätzlich zu dem O-Ring (51) in einer weiteren in der Mantelfläche der Lagerbohrung (50) des Gehäuses (10) vorgesehenen, umlaufenden Ringnut (54) ein Ring (53) aus einem an sich bekannten Brandschutzmaterial, bestehend aus einem bei einer Erwärmung auf über 120°C sich aufschäumend ausdehnenden und Wasserdampf ausscheidenden und bei ca. 180°C etwa das 5- bis 11-fache Volumen aufweisenden, eingebettete Silikate aufweisenden synthetischen Elastomer, derart zugeordnet ist, daß bei einer durch einen Brand od.dgl. bewirkten Erwärmung des Absperrhahns die Aufschäumung den Ringspalt (49) umlaufend ausfüllt und anstelle des durch die Erwärmung ggf. zerstörten O-Ringes (51) abdichtet.

Absperrhahn nach Anspruch 1, dadurch gekennzeichnet, daß der aus Brandschutzmaterial bestehende Ring (53) mit seiner inneren Mantelfläche (55) mit einem radialen Abstand zur äußeren Mantelfläche der Drehachse (13) angeordnet ist.

## Claims

1. A stop cock for a pressurised pipeline serving as a domestic connection, comprising a metallic tubular housing (10) having at both ends metallic pipe unions (19, 26) for connection of the feed and discharge pipes and accommodating a shut-off means (11) to be actuated by a handle (14) disposed outside the housing (10), the rotary spindle (13) which establishes the connection with the handle (14) being rotatably mounted in a bearing bore (50) in the housing (10), and the annular gap (49) between the rotary spindle (13) and the bearing bore (50) being sealed by an O-ring (51) inserted into an encircling annular groove (52), characterised in that in addition to the O-ring (51) there is associated with the annular gap (49), in a further encircling annular groove (54) provided in the peripheral surface of the bearing bore (50) of the housing (10), a ring (53) of a per se known fire-preventive material consisting of a synthetic elastomer which expands and foams up when heated to above 120°C, which excludes water vapour and which has about 5 to 11 times its volume at approx. 180°C, the synthetic elastomer comprising embedded silicates and in that when the stop cock is heated as the result of a fire or the like, the foam formed fills the annular gap (49) all round and provides a seal instead of the O-ring (51) which is possibly destroyed as a result of being heated.

2. A stop cock according to claim 1, characterised in that the inner surface (55) of the ring (53) which consists of a fire-protective material is at a radial distance from the outer surface of the rotary spindle (13).

## Revendications

1. Robinet d'arrêt destiné à une conduite sous pression, servant de branchement domestique, et comportant un boîtier métallique tubulaire (10) muni à ses deux extrémités de tubulures métalliques (19, 26) pour le raccordement de l'arrivée et de la sortie et recevant un organe d'arrêt (11) qui est agencé de manière à pouvoir être actionné par une manette (14), disposée à l'extérieur du boîtier (10), et dont l'axe de rotation (13) établissant la liaison avec la manette (14) est supporté de façon rotative dans un trou (50), formant palier, pratiqué dans le boîtier (10), l'espace annulaire (49) entre l'axe de rotation (13) et le trou (50) formant palier étant étanché par au moins un joint torique (51) placé dans une gorge annulaire périphérique (52), caractérisé en ce que, en sus du joint torique (51), une bague (53) qui est placée dans une autre gorge annulaire périphérique (54), pratiquée dans la paroi du trou (50), formant palier, du boîtier (10), et qui est faite en une matière protégeant du feu connue en soi, comprenant un élastomère synthétique s'expansant pour former une mousse et éliminant de la vapeur d'eau en cas d'échauffement au-dessus de 120°C, présentant un volume d'environ 5 à 11 fois supérieur aux environs de 180°C et comprenant du silicate enrobé, est associée à l'espace annulaire (49) de telle façon que, en cas d'échauffement du robinet d'arrêt à la suite d'un incendie ou analogue, la mousse produite remplisse complètement l'espace annulaire (49) et assure l'étanchement à la place du joint torique (51) éventuellement détruit par l'échauffement.

2. Robinet d'arrêt selon la revendication 1, caractérisé en ce que la paroi intérieure (55) de la bague (53) en matière protégeant du feu est disposée à une certaine distance radiale de la paroi extérieure de l'axe de rotation (13).

## FIG. 1

## FIG. 2

EP 0 283 537 B1